## Europäisches Patentamt
## European Patent Office
## Office européen des brevets

(19)

(11) Veröffentlichungsnummer : **0 125 637**
**B1**

(12) **EUROPÄISCHE PATENTSCHRIFT**

(45) Veröffentlichungstag der Patentschrift : 12.11.86

(21) Anmeldenummer : 84105292.1

(22) Anmeldetag : 10.05.84

(51) Int. Cl.⁴ : **F 16 L 3/12**, B 65 D 63/10, **F 16 B 2/08**

(54) Spannband, insbesondere zum Binden von langgestreckten Gegenständen.

(30) Priorität : 17.05.83 DE 8314534 U

(43) Veröffentlichungstag der Anmeldung : 21.11.84 Patentblatt 84/47

(45) Bekanntmachung des Hinweises auf die Patenterteilung : 12.11.86 Patentblatt 86/46

(84) Benannte Vertragsstaaten : DE FR IT SE

(56) Entgegenhaltungen :
DE-B- 2 918 810
DE-U- 8 231 443
GB-A- 2 065 218
US-A- 3 224 056
US-A- 3 258 819
US-A- 3 747 164

(73) Patentinhaber : Paul Hellermann GmbH
Siemensstrasse 5
D-2080 Pinneberg (DE)

(72) Erfinder : Six, Jörg, Dipl.-Ing.
Eiderstrasse 24
D-2000 Norderstedt (DE)
Erfinder : Kobarg, Gerd
Gärtnerweg 21
D-2082 Tornesch (DE)

(74) Vertreter : Glawe, Delfs, Moll & Partner Patentanwälte
Postfach 26 01 62 Liebherrstrasse 20
D-8000 München 26 (DE)

**Beschreibung**

Die Erfindung bezieht sich auf ein Spannband, insbesondere zum Binden von langgestreckten Gegenständen wie Kabelbäumen, bestehend aus einer beidseitig gezahnten Bandzunge, aus einem Klemmkeil, der mit seinem dünneren Ende mit einem Ende der Bandzunge verbunden ist und auf beiden Keilflächen gezahnt ist, und aus einem Klemmkopf mit einer von zwei einander gegenüberliegenden, keilförmig konvergierenden Öffnungsflächen begrenzten Klemmöffnung, von denen jeweils eine zur Abstützung des Keils und die andere gemeinsam mit einer Keilfläche zur Bildung eines Klemmspalts für die Bandzunge vorgesehen ist.

Bei denjenigen Spannbändern, deren Bandzunge mittels eines Klemmkeils in der konvergierenden Klemmöffnung des Klemmkopfs gehalten ist, beruht die Klemmwirkung darauf, daß der Klemmkeil mit wachsender Bandspannung zunehmend in die Klemmöffnung hineingezogen und dadurch die Klemmkraft verstärkt wird. Bei dem eingangs genannten, bekannten Spannband (DE-U-82 31 443) wird die Bandspannung einerseits von derjenigen Seite der Bandzunge auf den Klemmkeil übertragen, die mit ihm direkt einstückig verbunden ist. Andererseits wird der Klemmkeil auch von der Bandspannung des im Klemmkopf geklemmten, freien Endes der Bandzunge beaufschlagt, weil sie sich mit diesem in Zahneingriff befindet. Dieser Zahneingriff ist deshalb wichtig, weil nicht in allen Belastungsfällen damit gerechnet werden kann, daß beide Bandseiten gleich belastet sind und daß der Klemmkeil von der einstückig mit ihm verbundenen Bandseite hinreichend in den Klemmkopf hineingezogen wird. Ein anderes bekanntes Klemmband (US-A-3 258 819) bei welchem die Keilflächen ungezahnt sind, während eine mit der zu klemmenden Bandzunge zusammenwirkende Öffnungsfläche des Klemmkopfs passend zu der Bandzunge gezahnt ist, hat daher nur eine geringere Haltesicherheit. Alle in der Praxis bewährten Spannbänder der betrachteten Art folgen deshalb dem zuerst erläuterten Prinzip, bei welchem der Zahneingriff zwischen der zu klemmenden Bandzunge und dem Klemmkeil stattfindet, während die Öffnungsflächen des Klemmkopfs ungezahnt sind. Allen Ausführungen ist gemeinsam, daß jeweils nur eine der an der Bildung des Klemmspalts für die Bandzunge beteiligten Flächen, also entweder eine Keilfläche oder eine Öffnungsfläche, gezahnt ist, während die gegenüberliegende Fläche ungezahnt ist. Dadurch soll dem Keil die für die Funktion des Spannens notwendige, der Bandspannung folgende Verkeilungsbewegung innerhalb des Klemmkopfs ermöglicht werden. Die Haltefestigkeit des bekannten Klemmbands ist begrenzt durch die Festigkeit der verwendeten Bauteile, nämlich insbesondere des Klemmkopfs, der sich unter der Keilwirkung dehnt, und der zusammenwirkenden Zähne.

Der Erfindung liegt die Aufgabe zugrunde, die Haltefestigkeit des eingangs genannten Spannbands ohne die Notwendigkeit einer Materialverstärkung zu erhöhen.

Die erfindungsgemäße Lösung besteht darin, daß außer den Keilflächen auch die Öffnungsflächen gezahnt sind.

Die Bandzunge befindet sich demnach im Kopf in einem beidseitig gezahnten Klemmspalt. Sie steht mit ihren Zähnen sowohl in Eingriff mit der Zahnung des Klemmkeils als auch mit der zweckmäßigerweise passend zu den Bandzähnen gestalteten Zahnung auf der gegenüberliegenden Fläche des Klemmkopfs. Der doppelte Zahneingriff auf beiden Seiten der Bandzunge verbindet somit diese drei Teile formschlüssig miteinander, wodurch deren funktionelle Relativbeweglichkeit aufgehoben oder zumindest stark eingeschränkt wird. Dies steht im Widerspruch zu dem bisher bekannten Funktionsprinzip des betroffenen Spannbandtyps, das zur Klemmverkeilung der Bandzunge die freie Verkeilungsbeweglichkeit des Klemmkeils verlangt. Ausgehend von diesem bisher unangefochtenen Prinzip ist die erfindungsgemäße Lösung daher widersprüchlich.

Die erfindungsgemäße Lösung mutet — ausgehend von dem bisherigen Funktionsprinzip — auch befremdend an, weil keine definierten Eingriffsverhältnisse garantiert werden. Es ist prinzipiell ausgeschlossen, daß sich die Zähne der Bandzunge ständig sowohl mit den Zähnen des Klemmkopfs als auch mit denen des Klemmkeils stets in vollem Eingriff befinden. Im Gegenteil ist der Normalfall der, daß zumindest auf einer Seite der Bandzunge eine Eingriffsverschiebung gegenüber der anderen vorhanden ist. Bei niedrigen Bandspannungen kann nicht einmal ein fester Sitz der Bandzunge im Klemmkopf garantiert werden.

Dies alles sind paradoxe und scheinbar für einen kraftvollen Eingriff äußerst ungünstige Voraussetzungen. Jedoch hat die Erprobung gezeigt, daß die Haltekräfte des erfindungsgemäß ausgestalteten Spannbands wesentlich höher sind als diejenigen der bekannten, ansonsten gleichen Spannbänder, nämlich nahezu doppelt so hoch.

Die Begründung dafür mag zum Teil darin liegen, daß im Zustand hoher Belastung des Bands die Kraftübertragung von der geklemmten Bandzunge hauptsächlich direkt auf die Zahnung des Klemmkopfs stattfindet, wodurch der Klemmkeil im Vergleich mit den bekannten Bändern entlastet wird. Die Entlastung des Keils führt wiederum zu einer Verringerung der den Klemmkopf spreizenden und deformierenden Keilkräfte. Zwar muß auf der Keilseite wegen des unvollkommenen Eingriffs mit Verformungen an den zusammenwirkenden Zähnen von Keil und Bandzunge gerechnet werden ; da diese aber für die Kraftübertragung nicht oder nur weniger verantwortlich sind, schadet dies nicht. Gleichwohl kann die Erfindung nicht auf die zusammenwirkenden Zahnungen an Keil und Bandzunge verzichten, weil nur dadurch gewährleistet wird, daß der Klemmkeil auch bei wechselnder Belastung und Relativbewegungen innerhalb des Klemmkopfs stets in seine Klemmstellung zurückgeführt wird.

Nach einem weiteren Merkmal der Erfindung ist vorgesehen, daß die Öffnungsflächen und die Keilflächen neben der Zahnung relativ zueinander vorspringende und auf der nicht den Klemmspalt bildenden Seite zusammenwirkende, ungezahnte, den maximalen Zahneingriff zumindest im Zustand geringer Bandbelastung hindernde Stützflächen aufweisen. Dadurch wird erreicht, daß die Verkeilungsbewegung des Klemmkeils wenigstens nicht auf dessen der geklemmten Bandzunge abgewandten Seite und wenigstens nicht im Zustand geringer Spannung behindert wird. Im Zustand hoher Spannung kann hingegen vorgesehen sein, daß die einander unmittelbar gegenüberliegenden Zähne des Klemmkeils und des Klemmkopfs infolge von Verformung der Stützflächen in mehr oder weniger starken Eingriff miteinander kommen, um dadurch dem Klemmkeil eine zusätzliche Abstützung gegenüber den ihn in Verkeilungsrichtung ziehenden Kräften zu bewirken. Dadurch wird nicht nur der Klemmkeil mit höherer Sicherheit im Klemmkopf gehalten, sondern es werden auch die Verkeilungskräfte und damit die Deformation des Klemmkopfs weiter herabgesetzt. Wenn gemäß bevorzugter Ausführung die Zähne auf den Öffnungsflächen des Klemmkopfs passend zu den Zähnen der zu klemmenden Bandzunge ausgeführt sind und diese — wie üblich — mit steiler Vorwärtsflanke und flacher Rückwärtsflanke ausgeführt sind, ist die Wirkung des Zahneingriffs zwischen Klemmkeil und Öffnungsfläche des Klemmkopfs im übrigen auch nicht sehr stark, weil die in Verkeilungsrichtung weisenden Flanken der Zähne des Klemmkeils die flachen Rückwärtsflanken sind.

Die Erfindung wird im folgenden näher erläutert unter Bezugnahme auf das in der Zeichnung dargestellte Ausführungsbeispiel. Darin zeigen :

Figur 1 eine Seitenansicht der Bandzunge und des Keils auf einer gezahnten Seite,

Figur 2 eine Seitenansicht des Keils in Richtung II der Fig. 1,

Figur 3 einen der Fig. 2 entsprechenden Mittelschnitt,

Figur 4 einen Schnitt gemäß Linie IV-IV der Fig. 3,

Figur 5 eine Draufsicht auf den Klemmkopf,

Figur 6 eine Schnittansicht gemäß Pfeil VI der Fig. 5,

Figur 7 eine der Fig. 6 entsprechende Schnittansicht des Klemmkopfs mit eingefügtem Keil und Band ohne wesentliche Spannung,

Figur 8 eine der Fig. 7 entsprechende Darstellung mit höherer Bandspannung und

Figur 9 einen Schnitt durch die Anordung gemäß Fig. 7 gemäß der Linie IX-IX.

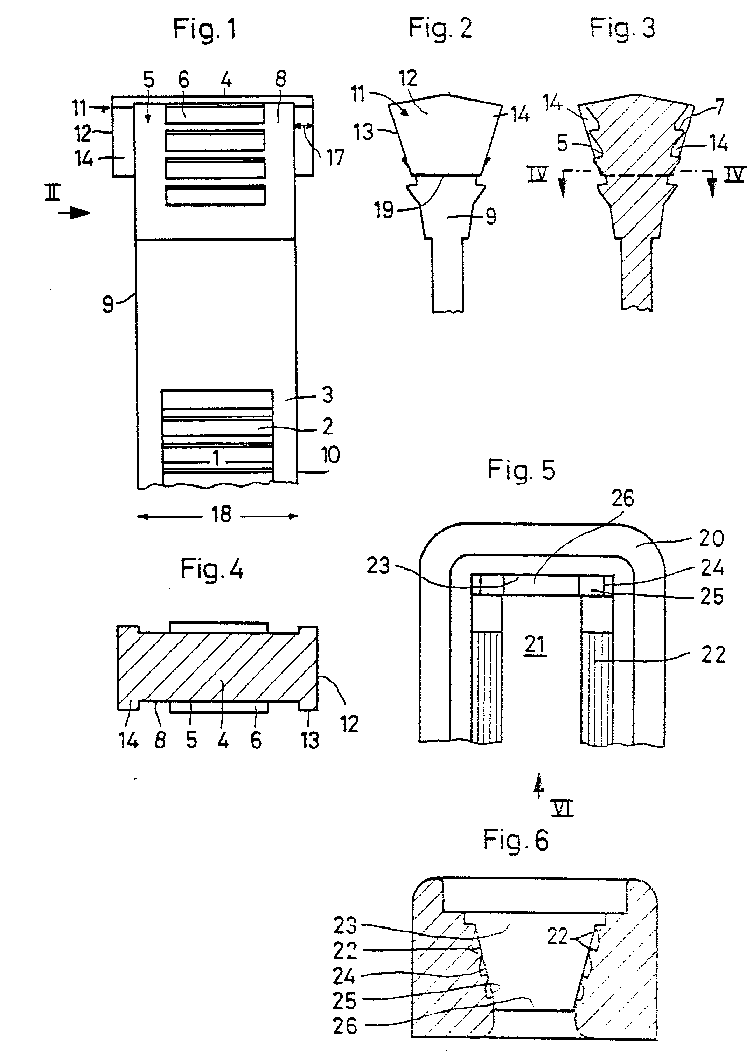

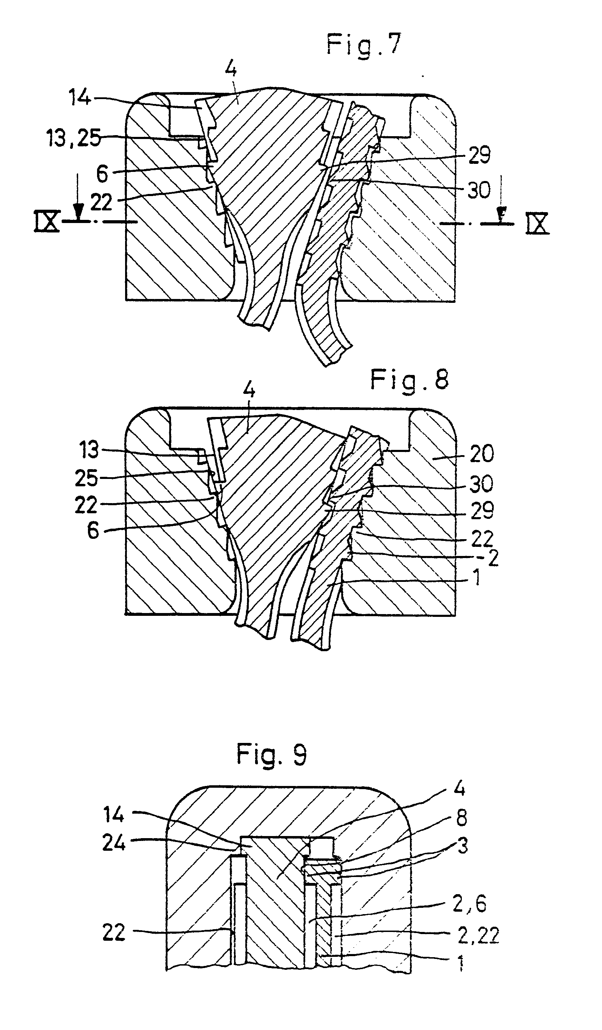

Gemäß Fig. 1 tragen die Hauptseiten der Bandzunge 1 in einem mittleren Streifen eine Zahnung 2, deren Querschnittsgestalt man den Fig. 6 und 7 entnehmen kann, und beiderseits der Zahnung 2 einen glatten Randstreifen 3, dessen Oberfläche in derselben Ebene liegt wie die Spitzen der Zahnung 2. Das Band besteht beispielsweise aus Polyamid.

Mit einem Ende des Bandes ist der Klemmkeil 4 mit seinem schmalen Ende fest und einstückig verbunden, so daß seine Keilflächen 5 die Fortsetzung der gezahnten Hauptflächen des Bandes bilden. In der Mitte der Keilflächen 5 befindet sich eine Zahnung 6, die der Zahnung 2 der Bandzunge passend entspricht, nämlich in dem Sinne, daß die tragenden Vorwärtsflanken 7 der Keilzähne zu dessen breiterem Ende hinschauen und die Zähne der Bandzunge in derselben Richtung orientiert sind, so daß sie nach Bildung einer Schlaufe von 180° den Zähnen des Keils komplementär entgegengesetzt orientiert sind. Die Zahnung 6 des Keils ist etwas schmaler als diejenige der Bandzunge 1, so daß sie ohne Schwierigkeiten zwischen die Randstreifen 3 der Bandzunge paßt. Diesen Randstreifen 3 entsprechen auf den Keilflächen 5 des Keils Randstreifen 8, die gegenüber den Zähnen in die Ebene des Zahngrundes zurückversetzt sind.

Die quer zu den Keilflächen 5 verlaufenden Seitenflächen 9 des Keils fluchten mit den entsprechenden Seitenflächen 10 des Bandes und sind eben. Sie tragen vom breiteren Ende bis über den Mittelbereich des Keils hinaus einen plattenartigen Vorsprung 11, der einerseits durch eine zu der Fläche 9 parallele, dieser gegenüber jedoch vorspringende, ebene Fläche 12 und andererseits durch zwei den Keilflächen 5 etwa parallel laufende, diesen gegenüber vorspringende Keilflächen 13, sowie schließlich durch eine die Flächen 9 und 12 verbindende Stufenflächen 19 begrenzt ist. Dadurch werden auf jeder Seite des Keils neben jeder Keilfläche 5 vorspringende Leisten 14 gebildet, die als Stützränder bezeichnet werden. Im breiteren Bereich des Keils springen die Stützränder gegenüber der Zahnung 6 vor, während sie im mittleren Bereich des Keils dahinter zurückbleiben.

Der Keil ist in jeder Richtung symmetrisch ausgebildet und besteht einstückig aus demselben Material wie die Bandzunge, vorzugsweise Polyamid.

Aus demselben Material besteht zweckmäßigerweise auch der Klemmkopf 20, der ein vom Keil der Bandzunge gesondertes Teil darstellt. In der Draufsicht gemäß Fig. 5 erkennt man ihn als Rahmen, der auf der nicht gezeigten Seite symmetrisch geschlossen ist. Der Klemmkopf 20 enthält eine Öffnung 21, die in Fig. 5 und 6 rechts und links durch keilförmig konvergierende Öffnungsflächen und auf den quer dazu verlaufenden Seiten durch zueinander parallele Seitenflächen 23 begrenzt ist. Die Öffnungsflächen schließen mit der Mittelachse einen Keilwinkel von etwa 18° ein, der ungefähr ebenso groß ist wie der Keilwinkel der Flächen 13 der Stützränder 14 des Keils 4 und tragen in ihrem mittleren Bereich 4 Zähne 22, deren Form komplementär ist zu denen der Bandzunge. Die Seitenflächen 23 haben einen lichten Abstand voneinander, der nur wenig größer ist als derjenige der Seitenflächen 12 des Keils 4, so daß der Keil passend in die Öffnung 21 eingesetzt werden kann. Dabei ist der Abstand zwischen den Öffnungsflächen so groß, daß neben dem Keil auch noch die Bandzunge in die Öffnung 21 eingeschoben werden kann, wie dies in Fig. 7 und 8 dargestellt ist.

In der Ecke am Übergang zwischen den Öffnungsflächen und den Seitenflächen 23 enthält der Klemmkopf schmale Leisten 24, die etwa parallel zu den Öffnungsflächen verlaufen und im vorliegenden Zusammenhang als Stützränder bezeichnet werden. Sie entsprechen in ihrer Lage und Breite den Stützrändern 14 des Keils 4. Ihre einander zugewendeten Stützflächen 25 gehen nahe dem unteren Ende der Öffnung 21 in eine quer zur Öffnungsrichtung verlaufende Stufe 26 über. Die Stufe 26 entspricht der Stufenfläche 19 des Keils. Im Zusammenwirken verhindern diese Flächen, daß der Keil 4 unter der Einwirkung excessiver Kräfte nach unten aus dem Klemmkopf 20 herausgezogen werden kann.

Im montierten Zustand durchläuft (siehe Fig. 8 und 9) der Kraftfluß der Klemmkräfte im Klemmkopf von links nach rechts den folgenden Weg : Stützfläche 25 oder Zähne 22 des Klemmkopfs, Stützfläche 13 oder Zähne 6 des Klemmkeils, Randstreifen 8 und Zahnung 6 der Keilfläche 5, Randstreifen 3 bzw. Zahnung 2 der Bandzunge 1 auf deren linker Seite, Zahnung 2 der Bandzunge 1 auf deren rechter Seite, Zahnung 22 des Klemmkopfs.

Wenn das Spannband montiert wurde und keine wesentliche Spannung herrscht, befinden sich die Bandzunge 1 und der Keil 4 in der Öffnung 21 des Klemmkopfs beispielsweise in der in Fig. 7 dargestellten Lage. Die Zähne der Bandzunge 1 greifen in die Zähne 22 des Klemmkopfs ein. Zwischen dem Spannband und der gegenüberliegenden Öffnungsfläche liegt der Keil, der im dargestellten Beispiel mehr oder weniger lose gezeigt ist. Wird eine gewisse Spannung aufgewendet, so zieht er sich in den zwischen Bandzunge 1 und gegenüberliegender Öffnungsfläche befindlichen Keilraum soweit hinein, daß er beiderseits anliegt, wobei sich offensichtlich keine passende Konfiguration zwischen den Zähnen des Keils und der Bandzunge ergibt. Insbesondere liegen die Zähne 29 und 30 nahe ihren Spitzen aneinander an. Wird nun eine größere Kraft auf den Keil ausgeübt, so zwängt sich unter elastischer Verformung der Zahn 29 an dem Zahn 30 vorbei, bis der Klemmkeil 4 die in Fig. 8 dargestellte Lage erreicht hat, in der zwar sämtliche Teile fest aneinanderliegen, jedoch ohne vollständigen und passenden Eingriff der Bandzähne in diejenigen des Keils. Dabei wird durch den Keilzug der feste und passende Eingriff der Bandzähne in die Zähne 22 des Klemmkopfs gesichert und damit auch seine gute Kraftübertragung. Dieser Zustand bleibt auch beim Auftreten hoher Kräfte erhalten, wobei lediglich der Klemmkeil 4 weiter vorrückt unter entsprechender Verformung der Zähne 29, 30 sowie der benachbarten Zähne.

Auf der der Bandzunge 1 abgewandten Seite des Klemmkopfs gleiten die Stützflächen 13 und 25 des Klemmkeils und des Klemmkopfs aufeinander. Bei zunehmender Verformung können auch die Zähne 6 des Klemmkopfs in die Zahnvertiefungen zwischen den Zähnen 22 eingreifen, wodurch der Verkeilungsbewegung des Klemmkopfs 4 weiterer Widerstand entgegengesetzt wird, ohne daß dadurch die Anpressung der Bandzunge an der entgegengesetzten Öffnungsfläche beeinträchtig wird.

Während die Kräfte der Bandzunge unmittelbar auf die Zähne 22 des Klemmkopfs übertragen werden, werden die vom Band unmittelbar auf den Klemmkeil übertragenen Kräfte einerseits über die Stützflächen 13, 25 bzw. die Zähne 6, 12 auf eine Öffnungsfläche des Klemmkopfs übertragen. Andererseits findet auch eine gewisse Kraftübertragung von dem Klemmkopf über die Zähne 29, 30 auf die Bandzunge und von dieser auf die ihr zugehörige Öffnungsfläche bzw. deren Zähne 22 statt. Während bei den herkömmlichen, von der Erfindung verbesserten Spannbändern sämtliche Kräfte, auch die von der geklemmten Bandzunge herrührenden, über den Klemmkeil und über beiderseits glatte Keilflächen auf den Klemmkopf übertragen werden mußten, was zu entsprechend hohen Keilkräften und Verformungen führte, findet bei dem erfindungsgemäßen Spannband eine gute Verteilung der Kräfte statt, die großenteils ohne unmittelbare Wirkung auf die Keilkräfte auf dem Wege über die Zahnung 22 von dem Klemmkopf übernommen werden können.

Da die Kraftübertragung zwischen den Zähnen 2 der Bandzunge 1 einerseits und den Zähnen 6 des Klemmkeils andererseits für die Haltekraft bei hohen Spannungen nicht entscheidend sind, ist es nicht erforderlich, daß die Zähne 6 des Klemmkeils 4 genau komplementär passend zu den Zähnen 2 der Bandzunge ausgebildet sind. Erforderlich ist lediglich, daß sie so sicher von den Zähnen 2 der Bandzunge 1 erfaßt werden können, daß der Klemmkeil 4 auch bei wechselnden und gegebenenfalls auf Null gehenden Bandspannungen und entsprechenden Relativbewegungen des Klemmkeils gegenüber dem Klemmkopf stets von der Bandzunge wieder in die Klemmstellung zurückgezogen wird. Bei hohen Kräften ist diese Funktion hingegen nicht erforderlich, weil dann damit zu rechnen ist, daß vom Band ohnehin hinreichende Kräfte unmittelbar auf den damit verbundenen Klemmkeil 4 übertragen werden, so daß er aufgrund seiner Verkeilungsfunktion die zu klemmende Bandzunge sicher in der vorgesehenen Lage halten kann.

Weil demnach ein qualitativ hochwertiger Eingriff zwischen den Zähnen 2 und 6 nicht erforderlich ist, können die Zähne 6 auch anders als dargestellt ausgeführt sein, beispielsweise flacher, damit sie bei der Montage des Spannbands leichter als dies durch den Unterschied zwischen den Fig. 7 und 8 angedeutet ist, in eine Position mit maximalem gegenseitigen Eingriff sämtlicher Teile gelangen können.

**Patentansprüche**

1. Spannband, insbesondere zum Binden von langgestreckten Gegenständen wie Kabelbäumen, bestehend aus einer beiderseits gezahnten Bandzungen (1), aus einem Klemmkeil (4), der mit seinem dünneren Ende mit einem Ende der Bandzunge verbunden ist und auf beiden Keilflächen (5) gezahnt (6) ist und aus einem Klemmkopf (20) mit einer von zwei einander gegenüberliegenden, keilförmig konvergierenden Öffnungsflächen begrenzten Klemmöffnung (21), von denen jeweils eine zur Abstützung des Keils (4) und die andere gemeinsam mit einer Keilfläche (5) zur Bildung eines Klemmspalts für die Bandzunge (1) vorgesehen ist, dadurch gekennzeichnet, daß auch die Öffnungsflächen gezahnt (22) sind.

2. Spannband nach Anspruch 1, dadurch gekennzeichnet, daß die Zahnung (22) der Öffnungsflächen komplementär passend zur Zahnung (2) der Bandzunge (1) ausgebildet ist.

3. Spannband nach Anspruch 1 oder 2, dadurch gekennzeichnet, daß die Öffnungsflächen und die Keilflächen neben der Zahnung (22, 6) relativ zueinander vorspringende und auf der nicht den Klemmspalt bildenden Seite zusammenwirkende, ungezahnte, den maximalen Eingriff der Zähne (6, 22) zumindest im Zustand geringer Bandbelastung hindernde Stützflächen (13, 25) aufweisen.

**Claims**

1. Tightening strap, in particular for tying longitudinally extended objects such as cable harnesses, consisting of a strap tongue (1) which is toothed on both sides, a clamping wedge (4), which, with its thinner end, is connected to an end of the strap tongue and is toothed (6) on both wedge surfaces (5), and a clamping head (20) having a clamping opening (21) defined by two opening surfaces which are located opposite one another and converge in a wedge shape, of which opening surfaces in each case one is provided for supporting the wedge (4) and the other is provided, together with a wedge surface (5), for forming a clamping gap for the strap tongue (1), characterized in that the opening surfaces (22) are also toothed (22).

2. Tightening strap according to Claim 1, characterized in that the toothing (22) of the opening surfaces is made such that it matches the toothing (2) of the strap tongue (1) in complementary manner.

3. Tightening strap according to Claim 1 or 2, characterized in that the opening surfaces and the wedge surfaces, next to the toothing (22, 6) have supporting surfaces (13, 25) which project relative to one another, interact on the side which does not form the clamping gap, are untoothed and prevent the maximum engagement of the teeth (6, 22) at least in the condition of slight strap loading.

**Revendications**

1. Collier de serrage, en particulier pour la ligature d'objets de forme allongée tels que des faisceaux de câbles, se composant d'une languette de bande (1) dentée des deux côtés, d'un coin de blocage (4) qui est raccordé par son extrémité plus mince à l'une des extrémités de la languette de bande et qui est denté (6) sur ses deux surfaces formant coin (5) et d'une tête de blocage (20) comportant une ouverture de blocage (21) limitée par deux surfaces d'ouverture mutuellement opposées, convergeant en forme de coin, dont l'une est prévue pour servir d'appui au coin (4) et l'autre est prévue pour former, en commun avec une surface en forme de coin (5), une fente de blocage pour la languette de bande (1), caractérisé en ce que les surfaces d'ouverture sont dentées (22) elles aussi.

2. Collier de serrage selon la revendication 1, caractérisé en ce que la denture (22) des surfaces d'ouverture est réalisée sous forme adaptée de façon complémentaire à la denture (2) de la languette de bande (1).

3. Collier de serrage selon la revendication 1 ou 2, caractérisé en ce que les surfaces d'ouverture et les surfaces en forme de coin présentent, à côté de la denture (22, 6), des surfaces d'appui non dentées, faisant saillie les unes par rapport aux autres et coopérant du côté ne formant pas la fente de blocage, empêchant l'engrènement maximal des dents (6, 22), au moins dans l'état de faible sollicitation du collier.

Fig. 1

Fig. 2

Fig. 3

Fig. 4

Fig. 5

Fig. 6

**Fig. 7**

**Fig. 8**

**Fig. 9**